# FASCICULE DE BREVET EUROPEEN

(11) **EP 0 744 640 B1**
(45) Date de publication et mention de la délivrance du brevet: **30.08.2006**
(21) Numéro de dépôt: 96401100.1
(22) Date de dépôt: 21.05.1996
(51) Int. Cl.: G02B 6/44

(54) **Boîtier de raccordement de fibre optique**
Verbindungsgehäuse für optische Fasern
Connection box for optical fibres

(30) Priorité: 24.05.1995 FR 9506223
(43) Date de publication de la demande: 27.11.1996
(73) Titulaire: ALCATEL CABLE INTERFACE, 08330 Vrigne aux Bois (FR)
(72) Inventeur: Vincent, Alain, 77230 Juilly (FR); Milanowski, Michel, 60540 Anserville (FR); Lepeuve, Alain, 78590 Noisy le Roi (FR)
(74) Mandataire: Feray, Valérie

(56) Documents cités:
- EP-A- 0 116 480
- EP-A- 0 202 994
- EP-A- 0 216 073
- EP-A- 0 434 254
- EP-A- 0 637 767
- WO-A-89/08276
- DE-A- 4 020 788
- FR-A- 2 559 277
- US-A- 4 840 449
- US-A- 4 958 903
- US-A- 5 210 812
- US-A- 5 323 479

## Description

La présente invention concerne un boîtier de raccordement de fibre optique.

Le développement des réseaux de fibres optiques pour les applications professionnelles et domestiques a connu et connaîtra dans les années à venir une forte croissance. Un réseau de fibres optiques apparaît sous la forme d'artères, définissant des ramifications et terminaisons aboutissant chez l'abonné. En des points de ces artères, sont définies des jonctions bout à bout et fibre à fibre entre câbles optiques, des dérivations de câble pour desservir des abonnés locaux, etc... Pour cela, la technique antérieure prévoit des boîtiers ou manchons chacun destiné à la mise en oeuvre d'une fonction spécifique, telle que jonction ou dérivation, en un point du réseau. A titre d'exemple, le brevet américain US-A-5 210 812 décrit un manchon de dérivation de câble à fibre optique et le brevet américain US-A-4 840 449 est relatif à un boîtier de jonction de câbles optiques. Un boîtier de raccordement de fibre optique est décrit dans le document EP 0 216 073. Ce boîtier comprends un base et une couvercle avec des moyens de lavage, des moyens d'accès de cable, et des moyens de fixation de câble des éléments de serrage de l'enveloppe extérieure du câble.

Il est à prévoir que dans les années à venir, en raison du nombre croissant de réseaux optiques, les installateurs de réseau souhaiteront voir diminuer le nombre total des différents types d'équipements, boîtiers ou manchons, prévus en ces points de jonction, de dérivation, etc... du réseau, et cela, d'une part, dans un objectif de simplification des interventions des techniciens sur le réseau, et, d'autre part, dans un souci de voir se réduire le coût des stocks de ces fournitures.

Dans ce contexte, l'invention vise à fournir un boîtier multifonctions de raccordement optique.

A cette fin, un boîtier de raccordement de fibre optique conforme à la revendication 1 et sous la forme de deux éléments de boîtier s'assemblant pour former ledit boîtier et comprenant des moyens de lovage, des moyens de fixation d'épissure de jonction et des moyens de réception de câble optique, est caractérisé selon l'invention en ce que les moyens de lovage et les moyens de fixation d'épissure de jonction sont portés par un premier élément de boîtier qui est distinct d'un second élément de boîtier portant les moyens de réception de câble optique, et en ce que le second élément de boîtier inclut en outre des moyens de fixation d'épissure de dérivation.

Typiquement, certains au moins des moyens de lovage, moyens de fixation d'épissure de jonction et moyens de fixation d'épissure de dérivation sont amovibles.

Par ailleurs, les moyens de fixation d'épissure de dérivation sont disposés longitudinalement dans ledit second élément de boîtier et parallèlement à une voie de passage de câble dans ce second élément de boîtier pour un montage en dérivation. Ces moyens de fixation d'épissure de dérivation sont par exemple sous la forme au moins d'une plaque de mousse sous laquelle sont destinées à être disposées des épissures de dérivation.

Les moyens de réception de câble optique comprennent des moyens d'accès de câble formés au moins en partie dans ledit second élément de boîtier, et des moyens de fixation de câble portés par ledit second élément de boîtier.

Pour la fixation des câbles entrant dans ou sortant du boîtier, il est prévu que les moyens de fixation de câble comprennent certains au moins des moyens parmi des moyens de fixation par collier, moyens de fixation par ancrage d'élément porteur et moyens de fixation par ancrage de renfort périphérique.

En outre, il est avantageusement prévu que les premier et second éléments de boîtier sont articulés entre eux par des moyens de charnière. Pour assurer sa fermeture, le boîtier peut comprendre des moyens de fermeture par clip qui sont portés en partie par le premier élément de boîtier et en partie par le second élément de boîtier.

D'autres caractéristiques et avantages de la présente invention apparaîtront plus clairement à la lecture de la description suivante, en référence aux dessins annexés correspondants, dans lesquels:
- la figure 1 montre une vue en perspective d'un boîtier selon l'invention représenté en position ouverte;
- la figure 2 montre une vue en perspective du boîtier selon l'invention dans un montage en dérivation de câble optique; et
- la figure 3 montre une vue en perspective d'un boîtier selon l'invention dans un montage de jonction de câbles optiques.

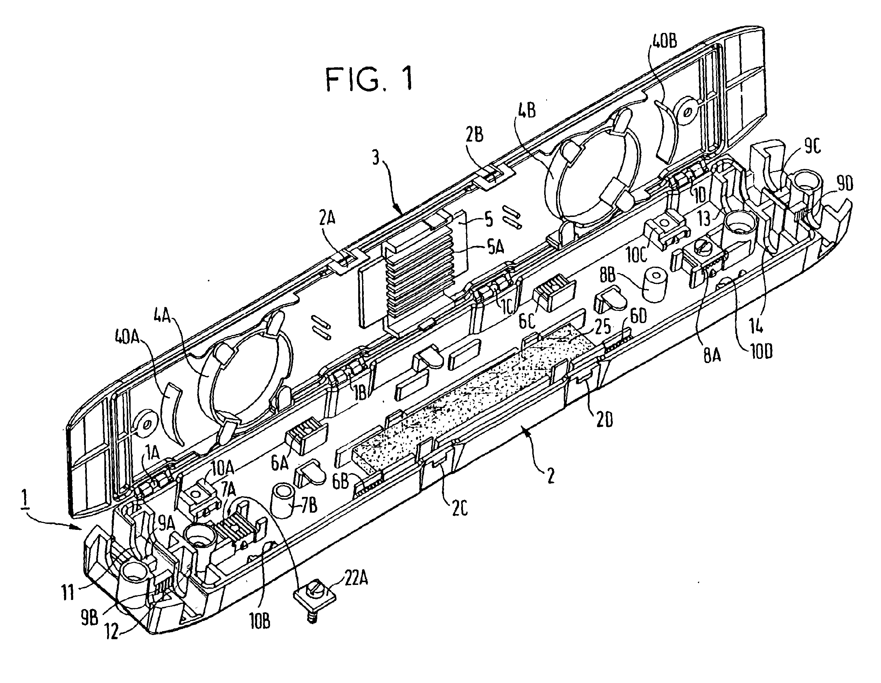

En référence à la figure 1, un boîtier multifonctions de raccordement de fibre optique 1 pour la mise en oeuvre de l'invention comprend un couvercle, ou premier élément de boîtier, 3 et un corps, ou second élément de boîtier, 2. Le boîtier 1, lorsqu'il est fermé, présente une forme sensiblement parallélépipédique rectangulaire. Le corps 2 comprend un fond rectangulaire délimité par deux parois latérales longitudinales et deux parois latérales transversales. Selon la réalisation illustrée, le couvercle 3 et le corps 2 du boîtier 1 sont assemblés par articulation autour d'un axe de pivotement défini par des charnières 1A, 1B, 1C et 1D qui sont portées par un chant de l'une des deux parois latérales longitudinales du corps 2 et par un premier rebord longitudinal correspondant du couvercle 3, de sorte que le couvercle puisse pivoter d'une position ouverte, telle que représentée dans cette figure 1, vers une position fermée. Les charnières 1A, 1B, 1C et 1D peuvent être déclipsable de sorte à permettre une séparation du couvercle 3 et du corps 2 du boîtier, et faciliter ainsi les manipulations de raccordement de câble par un technicien. Le boîtier 1 est maintenu fermé au moyen d'un montage à clip sous la forme d'au moins une languette 2A, 2B qui est portée par un second rebord longitudinal, opposé au premier rebord, du couvercle 3, et qui est prévue pour s'enclencher dans au moins un élément de verrouillage correspondant 2C, 2D formé dans l'autre des deux parois latérales longitudinales du corps 2. Deux vis (non représentées) sont également prévues pour assurer la fermeture du boîtier 1 et garantir également son herméticité au moyen d'un joint torique introduit entre les chants en regard des couvercle 3 et corps 2 du boîtier 1. Dans le fond du couvercle 3, ayant une forme rectangulaire correspondant au fond rectangulaire du corps 2 et délimité par des rebords de faible hauteur, sont prévus deux tambours de lovage de fibre optique 4A et 4B respectivement disposés sensiblement aux deux extrémités. Entre les deux tambours de lovage 4A et 4B, est prévu un élément de fixation d'épissure de jonction 5 muni de lames parallèles 5A définissant des rainures dans lesquelles sont maintenues les épissures. Avantageusement, à la périphérie de chaque tambour 4A, 4B, un élément de butée 40A, 40B est prévu qui est destiné à limiter le déploiement des fibres optiques entourant le tambour concerné au delà d'une zone prédéterminée.

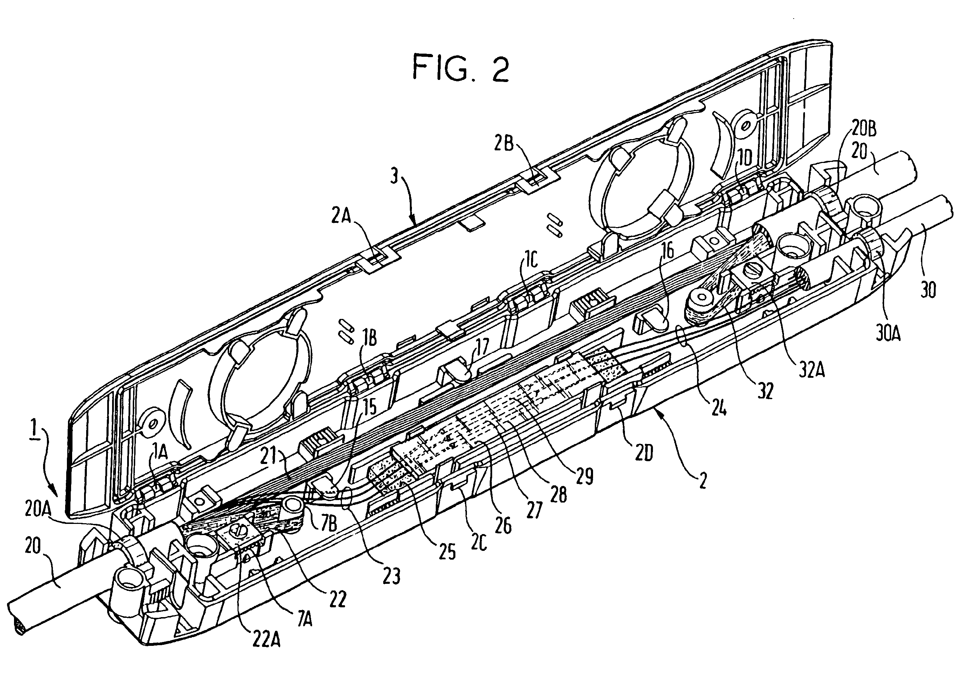

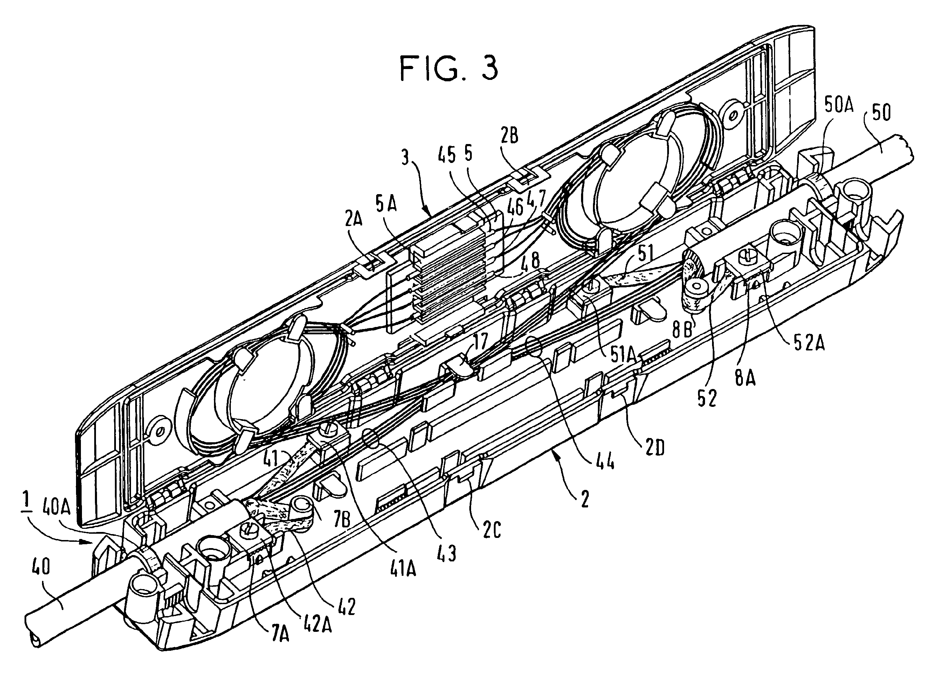

Le corps 2 du boîtier 1 inclut des moyens de réception de câble optique constitués de moyens d'accès de câble optique, qui sont formés au moins en partie dans ce corps, et de moyens de fixation de câble optique portés par ce corps 2. Les moyens d'accès de câble sont sous la forme d'ouvertures 11, 12 et 13, 14 formées dans les deux parois latérales transversales du corps de boîtier 2. Dans la réalisation montrée, deux ouvertures sont formées sur chacune des deux parois transversales, de part et d'autre d'un point médian. En ce qui concerne les moyens de fixation de câble, ils apparaissent sous différentes formes., Peuvent être distingués les éléments de fixation par collier 9A, 9B, 9C, 9D, les éléments de fixation par ancrage de renfort périphérique de câble 7A, 7B et 8A, 8B, les éléments de fixation par ancrage de porteur central de câble 6A, 6B, 6C et 6D et les éléments de fixation par peigne 10A, 10B, 10C et 10D. Chacun des éléments de fixation par collier 9A, 9B, 9C, 9D se présente sous la forme d'une branche saillante en équerre par rapport à la surface extérieure de la paroi transversale considérée du corps, et possédant une surface plane en dents de scie sur laquelle l'enveloppe extérieure du câble vient s'appuyer par serrage d'un collier 20A, 20B, 30A, 40A, 50A (voir figures 2 et 3) autour de ladite branche et du câble, de sorte à bloquer le mouvement du câble entrant ou sortant par rapport au boîtier 1. Les câbles optiques utilisant les éléments de fixation par ancrage de renfort périphérique de câble 7A, 7B et 8A, 8B et/ou les éléments de fixation par ancrage de porteur central de câble 6A, 6B, 6C et 6D sont des câbles comprenant un porteur central autour duquel sont enroulées, typiquement en hélice, des fibres optiques, elles-mêmes enveloppées par un renfort dit périphérique sous la forme d'une enveloppe filandreuse, le tout étant maintenu dans une enveloppe extérieure tubulaire en matériau plastique. Les éléments de fixation par ancrage de renfort périphérique 7A, 7B et 8A, 8B sont positionnés respectivement aux deux extrémités du boîtier sur le fond du corps 2. A chacune de ces deux extrémités, l'élément de fixation par ancrage e renfort périphérique se compose d'un point d'appui fixe 7B, 8B saillant sur le fond du corps, et d'un ressaut 7A, 8A à surface saillante en dents de scie. En référence à la figure 2, l'utilisation de ces éléments de fixation par ancrage de renfort périphérique est la suivante. Un câble 20, introduit par une ouverture formée sur la paroi transversale du corps 2, telle que 11, est dépouillé au moins partiellement de son enveloppe extérieure tubulaire de sorte à extraire une portion du renfort périphérique sous la forme d'une mèche 22. cette mèche 22 vient s'appuyer, en le contournant, sur le point d'appui 7B, et une extrémité de la mèche 22 est maintenue en étau entre la surface en dents de scie du ressaut 7A et une plaque de serrage 22A qui est fixée par vissage dans un trou fileté formé dans le ressaut 7A. Comme montré sur la figure 3, les éléments de fixation par ancrage de porteur central de câble 6A, 6B, 6C et 6D sont chacun sous la forme d'un ressaut à surface saillante en dents de scie sur laquelle le porteur du câble 41, préalablement extrait, est fixé par vissage d'une plaque de serrage 41A. Les éléments de fixation par peigne ne sont utilisés qu'à des fins de fixation de câble de terminaison d'abonné mono-fibre. Ils consistent chacun en un élément rapporté (non représenté) présentant des rainures d'introduction de câble, et en un ressaut 10A, 10B, 10C et 10D de vissage de plaque de serrage. Les ressauts 10A, 10B, 10C et 10D font saillie par paire transversalement des deux côtés de chacun des deux ressauts 7A et 7B de fixation par ancrage de renfort périphérique. Chacun des éléments rapportés est maintenu fixé notamment par des épaulements prévus sur les deux faces en regard des ressauts 10A, 10B, 10C et 10D et ressauts 7A et 7B. En revenant à la figure 2, sur le fond du corps de boîtier 2, est également prévu un support de fixation d'épissure de dérivatiolf 25, 26 qui est disposé longitudinalement dans le corps 2 et parallèlement à une voie de passage de câble prévue pour un montage en dérivation. Ce support de fixation d'épissure de dérivation comprend en outre une plaque de mousse 26 sous laquelle sont destinées à être disposées des épissures de dérivation 27, 28 et 29. Selon la caractéristique principale de l'invention qui apparaît à la lecture de ce qui précède, d'une part, les tambours de lovage 4A, 4B et l'élément de fixation d'épissure de jonction 5 sont portés par le couvercle 3 alors que les moyens de réception de câble optique sont contenus dans le corps du boîtier 2, et, d'autre part, le corps inclut en outre des moyens de fixation d'épissure de dérivation 25 et 26.

En référence aux figures 2 et 3, il va maintenant être décrit avec plus de détails les applications du boîtier selon l'invention respectivement pour un montage en dérivation et pour un montage en jonction.

Le montage en dérivation, illustré dans la figure 2, est utilisé pour desservir localement en un point donné du réseau optique un abonné ou un groupe d'abonnés donné. Comme montré dans cette figure, ce montage fait appel à un câble principal 20 et un câble de dérivation 30. Dans cette figure 2, le câble de dérivation est fixé au boîtier 1 au moyen uniquement d'un montage à bague 30A. Néanmoins, il peut être prévu, en variante ou en supplément, une fixation par ancrage d'un porteur du câble 30 et/ou une fixation par ancrage du renfort périphérique de ce câble. Le câble principal 20 traverse longitudinalement le boîtier à travers deux ouvertures, respectivement d'entrée et de sortie, en regard 11 et 13, tandis que le câble secondaire 30 traverse l'ouverture 14 formée dans la paroi transversale opposée à la paroi dans laquelle est formée l'ouverture d'entrée du câble principal 20. Le câble principal est dépouillé, sensiblement suivant toute la longueur du boîtier, de son enveloppe extérieure tubulaire et de son renfort périphérique. Seules deux mèches 22 et 32 de ce renfort périphérique, respectivement aux deux extrémités du boîtier sont gardées pour une fixation par ancrage de renfort périphérique, telle qu'expliquée précédemment. N=3 fibres optiques nécessaires à l'opération de dérivation sont extraites du câble 20 dépouillé de son enveloppe tubulaire et de son renfort périphérique, après sectionnement à une longueur appropriée, et amenées dans une voie de dérivation parallèle à la voie dé passage du câble principal, et séparée de celle-ci par une cloison. Le boîtier 1 est donc traversé par le câble 20 qui est dépouillé de son enveloppe extérieure, de son renfort périphérique et de N=3 fibres optiques, en un câble noté 21 dans la figure 2. En pratique, au moins un élément de cloison 15, 16 doit être utilisé pour séparer la voie de passage du câble 20 de l'élément de fixation d'épissure de dérivation 25-26. Des épissures 27, 28 et 29 sont alors réalisées entre ces fibres de dérivation 23 et des fibres respectives correspondantes du câble secondaire 30. Ces épissures sont ensuite disposées, pour y être maintenues, sous la plaque de mousse 26.

Le montage en jonction, illustré dans la figure 3, est utilisé pour sa part pour raccorder entre eux, fibre par fibre, deux câbles optiques 40 et 50. A l'intérieur du boîtier 1, l'extrémité de chacun des deux câbles 40 et 50 est dépouillé de son enveloppe extérieure tubulaire et de son renfort périphérique, et laisse apparaître à son extrémité une pluralité respective de fibres optiques libres 43, 44 qui sont en surlongueur. A chacune des deux extrémités respectives des deux câbles, apparaissent également une mèche 42, 52 du renfort périphérique et une portion de porteur 41, 51, qui sont fixées par ancrage, tel qu'expliqué précédemment. A l'intérieur du boîtier 1, pour chacun des deux câbles 40 et 50, la pluralité respective de fibres optiques libres en surlongueur 43, 44 issue du câble 40, 50 s'étend à partir de l'une respective des extrémités du boîtier 1 sur une portion de longueur du boîtier 1 pour être enroulée autour du tambour de lovage opposé 4B, 4A. Des épissures 45, 46, 47 et 48 sont ensuite établies entre les extrémités des deux pluralités respectives de fibres optiques 43, 44 issues des deux tambours 4A, 4B. Ces épissures sont maintenues dans les rainures formées par les lames 5A qui sont portées par l'élément de fixation d'épissure de jonction 5. Afin d'éviter que les fibres optiques 43, 44 s'étendant entre une extrémité du boîtier et le tambour opposé 4A, 4B soient libres de tout mouvement à l'intérieur du boîtier, ce qui pourrait notamment entraîner une détérioration des fibres, il est prévu un élément d'aiguillage de fibres optiques 17 destiné à limiter le mouvement des fibres à un déplacement longitudinal dans le corps du boîtier et empêcher tout déplacement transversal de celles-ci. Cet élément d'aiguillage 17 est placé au voisinage de la paroi longitudinale du corps 2 sur le chant duquel est fixé en articulation le couvercle 3, sensiblement en un point médian.

Il est à noter que, dans le boîtier décrit ci-dessus, certains au moins des éléments portés par le boîtier 1, tels que les tambours de lovage 4A, 4B, l'élément de fixation d'épissure de jonction 5 ou l'élément 25 de fixation d'épissure de dérivation, peuvent être amovibles. Ils peuvent néanmoins, à l'opposé, être intégrés au boîtier lors de son moulage.

## Revendications

1. Boîtier de raccordement de fibre optique (1) sous la forme de deux éléments de boîtier (2, 3) s'assemblant pour former ledit boîtier et comprenant des moyens de lovage (4A, 4B), des moyens de fixation d'épissure de jonction (5, 5A) destinés à recevoir des extrémités de fibres optiques raccordées entre elles par épissure, lesdites extrémités n'étant pas libres, et des moyens de réception de câble optique (11, 12, 13, 14; 6A, 6B, 6C, 6D; 7A, 8A), Les moyens de réception de câble optique comprenant des moyens d'accès de câble et des moyens de fixation de câble à serrage, le corps d'un second élément de boîtier comprenant des parois perpendiculaires à la direction d'entrée et de sortie des câbles,
**caractérisé en ce que**
lesdits moyens de lovage (4A, 4B) et lesdits moyens de fixation d'épissure de jonction (5, 5A) sont portés par un premier (3) desdits deux éléments de boîtier (2, 3) qui est distinct du second (2) desdits deux éléments de boîtier portant lesdits moyens de réception de câble optique (11, 12, 13, 14; 6A, 6B, 6C, 6D; 7A, 8A),
ledit second élément de boîtier (2) inclut en outre des moyens de fixation d'épissure de dérivation (25, 26) destinés à recevoir des extrémités de fibres optiques raccordées entre elles par épissure, lesdites extrémités n'étant pas libres,
lesdits moyens de fixation de câble comprenant des éléments de serrage destinés à venir serrer l'enveloppe extérieure dudit câble de manièr à bloquer le mouvement dudit câble par rapport au boîtier chacun desdits éléments de serrage se présentant sous la forme d'une branche parallèle à la direction d'entrée et de sortie des câbles, et saillant vers l'extérieur du second élément de boîtier, chacune desdites branches possédant une surface plane en dents de scie sur laquelle un collier vient s'appuyer en serrant l'enveloppe extérieure du câble.

2. Boîtier de raccordement de fibre optique conforme à la revendication 1, **caractérisé en ce que** certains au moins desdits moyens de lovage 4A, 4B), moyens de fixation d'épissure de jonction (5, 5A) et moyens de fixation d'épissure de dérivation (25, 26) sont amovibles.

3. Boîtier de raccordement de fibre optique conforme à la revendication 1 ou 2, **caractérisé en ce que** lesdits moyens de fixation d'épissure de dérivation (25, 26) sont disposés longitudinalement dans ledit second élément de boîtier (2) et parallèlement à une voie de passage de câble (20) dans ledit second élément de boîtier qui est prévue 30 pour un montage en dérivation.

4. Boîtier de raccordement de fibre optique conforme à l'une quelconque des revendications 1 a 3, **caractérisé en ce que** lesdits moyens de fixation d'épissure de dérivation (25, 26) sont sous la forme au moins d'une plaque de mousse (26) sous laquelle sont destinées à être disposées des épissures de dérivation (27, 28, 29).

5. Boîtier de raccordement de fibre optique conforme à l'une quelconque des revendications précédentes, **caractérisé en ce que** lesdits moyens d'accès de câble (11, 12, 13, 5 14) sont formés au moins en partie dans ledit second élément de boîtier (2), et lesdits moyens de fixation de câble (6A, 6B, 6C, 6D; 7A, BA; 9A, 9B, 9C, 9D; 20A, 20B) sont portés par ledit second élément de boîtier.

6. Boîtier de raccordement de fibre optique conforme à la revendication 5, **caractérisé en ce que** lesdits moyens de fixation de câble comprennent certains au moins des moyens parmi des moyens de fixation par collier (9A, 9B, 9C, 9D; 20A, 20B), moyens de fixation par ancrage d'élément porteur (6A, 6B, 6C, 6D, 41A, 51A) et moyens de fixation par ancrage de renfort périphérique (7A, BA; 42A, 52A; 7B, 8B).

7. Boîtier de raccordement de fibre optique conforme à l'une quelconque des revendications précédentes, **caractérisé en ce que** lesdits premier et second éléments de boîtier (2, 3) sont articulés entre eux par des moyens de charnière (1A, 1B, 1C, 1D).

8. Boîtier conforme à l'une quelconque des revendications précédentes, **caractérisé en ce qu'**il comprend des moyens de fermeture par clip (2A, 2B, 2C, 2D) dudit boîtier gui sont portés en partie par ledit premier élément de boîtier et en partie par ledit second élément de boîtier.

## Claims

1. An optical fiber connection box (1) as two box elements (2, 3) which assemble to form said box and comprising coiling means (A, 4B), junction splice attachment means (5, 5A) intended for receiving ends of optical fibers connected together by a splice, said ends not being free, and optical cable receiving means (11, 12, 13, 14; 6A, 6B, 6C, 6D; 7A, 8A), the optical cable receiving means comprising cable access means and cable attachment means with clamping, the body of a second box element comprising walls perpendicular to the entry and exit direction of the cables,
**characterized in that**
said coiling means (4A, 4B) and said junction splice attachment means (5, 5A) are borne by a first one (3) of said two box elements (2, 3), which is distinct from a second one (2) of said two box elements bearing said optical cable receiving means (11, 12, 13, 14; 6A, 6B, 6C, 6D; 7A, 8A),
said second box element (2) further includes branch splice attachment means (25, 26) intended to receive ends of optical fibers connected together by a splice, said ends not being free,
said cable attachment means comprising clamping elements intended for clamping the outer envelope of said cable in order to block the movement of said cable relatively to the box, each of said clamping elements having the shape of a branch parallel to the entry and exit direction of the cables, and protruding towards the outside of the second box element, each of said branches having a sawtooth plane surface on which a collar clip presses by clamping the outer envelope of the cable.

2. The optical fiber connection box according to claim 1, **characterized in that** at least some of said coiling means (4A, 4B), junction splice attachment means (5, 5A) and branch splice attachment means (25, 26) are removable.

3. The optical fiber connection box according to claim 1 or 2, **characterized in that** said branch splice attachment means (25, 26) are positioned longitudinally in said second box element (2) and parallel to a cable passage way (20) in said second box element which is provided (30) for a branch assembly.

4. The optical fiber connection box according to any of claims 1 to 3, **characterized in that** said branch splice attachment means (25, 26) are in the form of at least one foam plate (26) under which branch splices (27, 28, 29) are intended to be positioned.

5. The optical fiber connection box according to any of the preceding claims, **characterized in that** said cable access means (11, 12, 13, 5, 14) are formed at least in part in said second box element (2) and said cable attachment means (6A, 6B, 6C, 6D; 7A, BA; 9A, 9B, 9C, 9D; 20A, 20B) are borne by said second box element.

6. The optical fiber connection box according to claim 5, **characterized in that** said cable attachment means comprise at least some of the means from attachment means by clips (9A, 9B, 9C, 9D; 20A, 20B), attachment means by anchoring of bearing elements (6A, 6B, 6C, 6D, 41A, 51A) and attachment means by anchoring of peripheral reinforcement part(7A, BA; 42A, 52A; 7B, 8B).

7. The optical fiber connection box according to any of the preceding claims, **characterized in that** said first and second box elements (2, 3) are jointed together by hinge means (1A, 1B, 1C, 1D).

8. The box according to any of the preceding claims, **characterized in that** it comprises clip means for closing said box (2A, 2B, 2C, 2D), which are borne in part by said first box element and in part by said second box element.

## Patentansprüche

1. Lichtwellenleiter-Verbindungsgehäuse (1) in Form von zwei Gehäuseelementen (2, 3), die sich zusammenfügen, um das Gehäuse zu bilden, und das Aufschießmittel (4A, 4B), Spleißstellen-Befestigungsmittel (5, 5A), die zum Aufnehmen der Lichtwellenleiterenden dienen, die miteinander mittels Spleißung verbunden sind, wobei die Enden nicht frei sind, und Lichtwellenleiter-Aufnahmemittel (11, 12, 13, 14; 6A, 6B, 6C, 6D; 7A, 8A) aufweist, wobei die Lichtwellenleiter-Aufnahmemittel Kabel-Zugangsmittel und Kabel-Spannbefestigungsmittel enthalten, wobei der Körper eines zweiten Gehäuseelements Wände aufweist, die zu der Eingangs- und Ausgangsrichtung der Kabel senkrecht verlaufen,
**dadurch gekennzeichnet, dass**
- die Aufschießmittel (4A, 4B) und die Spleißstellen-Befestigungsmittel (5, 5A) von einem ersten (3) der zwei Gehäuseelemente (2, 3) getragen werden, das von dem zweiten (2) der zwei Gehäuseelemente verschieden ist, welche die Lichtwellenleiter-Aufnahmemittel (11, 12, 13, 14; 6A, 6B, 6C, 6D; 7A, 8A) tragen,
- das zweite Gehäuseelement (2) außerdem Spleißabzweigungs-Befestigungsmittel (25, 26) enthält, die zum Aufnehmen der Lichtwellenleiterenden bestimmt sind, die miteinander mittels Spleißung verbunden sind, wobei die Enden nicht frei sind,
- die Kabelbefestigungsmittel Spannelemente enthalten, die dazu bestimmt sind, die äußere Hülle des Kabels so zusammenzudrücken, dass sie die Bewegung des Kabels relativ zu dem Gehäuse blockieren, wobei jedes der Spannelemente sich in Form einer Verzweigung darstellt, die parallel zur Eingangs- und Ausgangsrichtung der Kabel verläuft und zur Außenseite des zweiten Gehäuseelements vorspringt, wobei jede der Verzweigungen eine gerade Fläche in Sägezahnform besitzt, auf der ein Ring zur Auflage kommt und dabei die äußere Hülle des Kabels zusammendrückt.

2. Lichtwellenleiter-Verbindungsgehäuse nach Anspruch 1, **dadurch gekennzeichnet, dass** wenigstens bestimmte der Aufschießmittel (4A, 4B), der Spleißstellen-Befestigungsmittel (5, 5A) und der Spleißabzweigungs-Befestigungsmittel (25, 26) abnehmbar sind.

3. Lichtwellenleiter-Verbindungsgehäuse nach Anspruch 1 oder 2, **dadurch gekennzeichnet, dass** die Spleißabzweigungs-Befestigungsmittel (25, 26) längs in dem zweiten Gehäuseelement (2) und parallel zu einem Kabel-Durchlassweg (20) in dem zweiten Gehäuseelement angeordnet sind, das für eine Abzweigungsmontage (30) vorgesehen ist.

4. Lichtwellenleiter-Verbindungsgehäuse nach einem der Ansprüche 1 bis 3, **dadurch gekennzeichnet, dass** die Spleißabzweigungs-Befestigungsmittel (25, 26) in Form wenigstens einer Schaumstoffplatte (26) vorliegen, unter der Spleißabzweigungen (27, 28, 29) angeordnet werden sollen.

5. Lichtwellenleiter-Verbindungsgehäuse nach einem der vorhergehenden Ansprüche, **dadurch gekennzeichnet, dass** die Kabel-Zugangsmittel (11, 12, 13, 5, 14) wenigstens teilweise in dem zweiten Gehäuseelement (2) gebildet sind und die Kabel-Befestigungsmittel (6A, 6B, 6C, 6D; 7A, 8A; 9A, 9B, 9C, 9D; 20A, 20B) von dem zweiten Gehäuseelement getragen werden.

6. Lichtwellenleiter-Verbindungsgehäuse nach Anspruch 5, **dadurch gekennzeichnet, dass** die Kabel-Befestigungsmittel wenigstens bestimmte Mittel von den Befestigungsmitteln mittels Ring (9A, 9B, 9C, 9D; 20A, 20B), Befestigungsmitteln mittels Tragelementverankerung (6A, 6B, 6C, 6D, 41A, 51A) und Befestigungsmitteln mittels Umfangsverstärkungs-Verankerung (7A, 8A; 42A, 52A; 7B, 8B) umfassen.

7. Lichtwellenleiter-Verbindungsgehäuse nach einem der vorhergehenden Ansprüche, **dadurch gekennzeichnet, dass** das erste und das zweite Gehäuseelement (2, 3) untereinander mittels eines Scharniers (1A, 1B, 1C, 1D) gelenkig verbunden sind.

8. Lichtwellenleiter-Verbindungsgehäuse nach einem der vorhergehenden Ansprüche, **dadurch gekennzeichnet, dass** es eine Clip-Verschlusseinrichtung (2a, 2B, 2C, 2D) des Gehäuses enthält, die teilweise von dem ersten Gehäuseelement und teilweise von dem zweiten Gehäuseelement getragen wird.
